# EUROPÄISCHE PATENTSCHRIFT

(11) **EP 1 356 483 B1**
(45) Veröffentlichungstag und Bekanntmachung des Hinweises auf die Patenterteilung: **09.05.2007**
(21) Anmeldenummer: 02706621.6
(22) Anmeldetag: 23.01.2002
(51) Int. Cl.: H01G 9/00

(54) **ELEKTROLYTLÖSUNG FÜR ELEKTROCHEMISCHE ZELLEN**
ELECTROLYTE SOLUTION FOR ELECTROCHEMICAL CELLS
SOLUTION ELECTROLYTIQUE DESTINEE A DES CELLULES ELECTROCHIMIQUES

(30) Priorität: 30.01.2001 DE 10103994
(43) Veröffentlichungstag der Anmeldung: 29.10.2003
(73) Patentinhaber: EPCOS AG, 81669 München (DE)
(72) Erfinder: SCHWAKE, Andree, 89520 Heidenheim (DE)
(74) Vertreter: Epping - Hermann - Fischer
(86) Internationale Anmeldenummer: PCT/DE2002/000221
(87) Internationale Veröffentlichungsnummer: WO 2002/061776

(56) Entgegenhaltungen:
- WO-A-00/19463
- FR-A- 2 773 267
- US-A- 5 811 205

## Beschreibung

Elektrochemische Zellen, beispielsweise Doppelschichtkondensatoren werden im Leistungsbereich eingesetzt, da sie sich mit hohen Kapazitäten bei gleichzeitig sehr kleinem ESR verwirklichen lassen. Beispielsweise als temporärer Energiespeicher genutzt müssen Doppelschichtkondensatoren in relativ kurzen Zeiträumen von einigen Sekunden und weniger hohe Ströme und damit verbunden hohe Energien abgeben oder aufnehmen. Damit dies möglichst verlustfrei erfolgen kann, muß der elektrische Innenwiderstand der Kondensatoren minimiert werden.

Neben dem Material der Elektrodenschichten, des Separators und dem Zellaufbau ist der Innenwiderstand von Doppelschichtkondensatoren ganz wesentlich von der Leitfähigkeit des Betriebselektrolyten abhängig. Für Doppelschichtkondensatoren großer Leistungsdichte werden Elektrolyte mit einer Leitfähigkeit von mehr als 20 mS/cm bei Raumtemperatur gesucht, mit denen sich Kondensatoren mit ausreichend niedrigen Innenwiderständen verwirklichen lassen.

Bekannte Elektrolyte für Doppelschichtkondensatoren mit Zellspannungen von mehr als 2V bestehen aus Lösungen von Leitsalzen in organischen Lösungsmitteln. Auch die Leitsalze sind organische Verbindungen bzw. weisen organische Kationen oder Anionen auf, beispielsweise auf der Basis von Oniumsalzen mit Stickstoff, Schwefel oder Phosphor als Zentralatom. Auch andere heterocyclische Verbindungen mit quaternären Stickstoffatomen sind als Kationen geeignet. Geeignete Anionen sind beispielsweise die komplexen Halogenide von Bor oder Phosphor, beispielsweise Tetrafluoroborat oder Hexafluorophosphat. Für die Leitfähigkeit dieser Elektrolytlösungen ist ein hoher Dissoziationsgrad der Salze unabdingbar, der von einem hochpolaren Lösungsmittel unterstützt wird. Bekannte Elektrolytlösungen für Doppelschichtkondensatoren sind daher Leitsalzlösungen in hochpolaren niederviskosen reinen Lösungsmitteln wie Acetonitril, die Leitfähigkeiten von mehr als 20 mS/cm bei 25°C erreichen. In der Druckschrift WO 99/60587 wird eine Elektrolytlösung mit einer Leitfähigkeit von 36 mS/cm offenbart, die ein N,N-Dialkyl-1,4-diazabicyclo[2.2.2]octandiamin-Salz als Leitsalz und Acetonitril als alleiniges Lösungsmittel enthält.

Nachteilig an diesen hochleitfähigen, Acetonitril enthaltenden Elektrolytlösungen ist, daß diese leichtenzündlich sind und sich im Brandfall giftige Blausäure (HCN) entwickelt. Kondensatoren mit solchen Elektrolytlösungen stellen also ein erhebliches Risiko im Brandfall dar und bereiten außerdem Probleme bei der Entsorgung.

WO 00/19463 offenbart eine Elektrolytlösung für elektrochemische Zellen mit einer Leitfähigkeit von 17.95 mS/cm bis 20.16 mS/cm (siehe z.B., Seite 14, Tabelle 1), die z.B. die folgenden Komponenten aufweisen kann:
A) Hochpolares Lösungsmittel, z.B. y-Butyrolacton.
B) Niederviskoses Lösungsmittel, z.B. Ethylencarbonat,
C) Ein Leitsalz, z.B. Triethylmethyl- oder Tetraethylammoniumtetrafluoroborat.

Aufgabe der vorliegenden Erfindung ist es, eine Elektrolytlösung mit hoher Leitfähigkeit anzugeben, die die genannten Nachteile bekannter Elektrolytlösungen vermeidet.

Diese Aufgabe wird erfindungsgemäß durch eine Elektrolytlösung mit den Merkmalen von Anspruch 1 gelöst. Vorteilhafte Ausgestaltungen der Erfindung ergeben sich aus weiteren Ansprüchen.

Eine erfindungsgemäße Elektrolytlösung weist ein Lösungsmittelgemisch auf, das im Brandfall kein HCN entwickelt und umfaßt Komponenten, die drei Kategorien A, B und C zugeordnet sind. Wichtigster Lösungsmittelbestandteil ist die Komponente A, die zumindest ein Lösungsmittel mit hoher Polarität umfaßt. Unter Lösungsmitteln mit hoher Polarität werden hier Lösungsmittel verstanden, die vorteilhafterweise eine Dielektrizitätskonstante (DK) > 10 aufweisen. Die Dielektrizitätskonstante eines Lösungsmittels läßt sich in einem Dekameter mittels Methoden bestimmen, die dem Fachmann bekannt sind. Sie werden beispielsweise im Römpp-Chemielexikon (9.Auflage) unter dem Begriff "Dielektrizitätskonstante" (Seite 955-956) dargestellt, worauf hier vollinhaltlich Bezug genommen wird.

Die Erfinder haben nun erkannt, daß allein die hohe Polarität des Lösungsmittels A) in einer Elektrolytlösung zum Erreichen einer ausreichend hohen Leitfähigkeit nicht ausreichend ist. Vielmehr besitzen eine Reihe hochpolarer Lösungsmittel eine hohe Viskosität, die häufig > 1 cP ist, was die Ionenbeweglichkeit darin zu lösender Leitsalze beeinträchtigt und so das Erreichen einer ausreichend hohen Leitfähigkeit der Elektrolytlösung verhindert.

Als weiterer Bestandteil B) ist daher erfindungsgemäß zumindest ein weiteres Lösungsmittel niedriger Viskosität zugesetzt, bis zusammen mit einer ausreichenden Menge eines Leitsalzes eine Elektrolytlösung von ausreichend niedriger Viskosität erhalten wird. Die als Komponente B) vorgesehenen Lösungsmittel niedriger Viskosität weisen dabei vorteilhafterweise eine Viskosität von < 1 cP auf. Die Viskosität eines Lösungsmittels läßt sich beispielsweise mittels eines Ubbelohde-Viskosimeters bestimmen.

Es zeigt sich, daß ein Maximum an Leitfähigkeit bei einem vom Lösungsmittel der Komponente A abhängigen Verdünnungsgrad bzw. bei einer damit verbunden Viskosität erreicht wird. Dieses Maximum an Leitfähigkeit wird nicht mit einer Lösungsmittel-Mischung erreicht, die dem Maximum der Polarität, ausgedrückt durch die Dielektrizitätskonstante des Lösungsmittelgemischs der Komponenten A und B entspricht, sondern mit einer Lösungsmittel-Mischung mit nicht maximaler Polarität aber idealer Viskosität bzw. Verdünnung. Die Erfindung stellt den bestmöglichen Kompromiß zwischen möglichst hoher Polarität bei gleichzeitig möglichst niedriger Viskosität dar.

Es wird eine erfindungsgemäße Elektrolytlösung erhalten, die eine bei 25°C bestimmte Leitfähigkeit von mehr als 20 mS/cm aufweist, die im Brandfall kein HCN freisetzt. Solche Leitfähigkeiten wurden bislang ausschließlich mit Lösungsmittelgemischen mit einem Acetonitrilanteil von mehr als 20 Gewichtsprozent erhalten. Die Erfindung gibt also erstmals einen Weg an, Elektrolytlösungen für als schnelle Energiezwischenspeicher geeignete Doppelschichtkondensatoren zu erhalten, die im Brandfall kein HCN entwickeln.

In einer erfindungsgemäßen Elektrolytlösung ist die Komponente A vorzugsweise in einem Anteil von zumindest 30 Gewichtsprozent enthalten. Vorzugsweise umfaßt die Komponente A) als hochpolares Lösungsmittel nach zumindest ein cyclisches Carbonat, welches leicht verfügbar, kostengünstig und von hoher Polarität ist. Ein solches cyclisches Carbonat ist in der gesamten Elektrolytlösung vorzugsweise in einem Anteil von zumindest 40 Gewichtsprozent vorhanden.

Ausgehend von einer geeigneten Komponente A) ist die Auswahl der Komponente B weitaus weniger kritisch, da sie ausschließlich von der Verträglichkeit mit den Komponenten A) und C) und der damit verbundenen Viskositätsreduzierung abhängig ist.

Eine weitere Ausführungsform der Erfindung kann auch Acetonitril umfassen, dessen Gehalt bzw. Anteil im gesamten Elektrolyten dabei auf maximal 20 Gewichtsprozent eingestellt ist. Ab einem solch niedrigen Acetonitrilgehalt ist die Gefahr einer Entwicklung von Blausäure im Brandfall als gering einzustufen.

Als Komponente C) können Leitsalze und Mischungen von Leitsalzen ausgewählt sein aus der Gruppe der quaternären Ammoniumborate, Ammoniumfluoralkylphosphate, Ammoniumfluoralkylarsenate Ammoniumtrifluormethylsulfonate, Ammoniumbis(fluoromethansulfon)imide oder Ammoniumtris(fluoromethansulfonyl)methide. Als Kationen lassen sich abgesehen von Ammonium-Ionen auch andere Kationen einsetzen, die ausgewählt sind aus der Gruppe der Pyridinium-Kationen, Morpholinium-Kationen, Lithium, Imidazolium, und Pyrrolidinium. Abgesehen von den oben genannten Anionen können auch Perchlorate, Tetrachloroaluminate, oder Oxalatoborate oder Mischungen dieser Anionen verwendet werden. Für noch höhere Leitfähigkeiten können erfindungsgemäß auch geschmolzene Salze mit organischen Kationen eingesetzt werden, die bei Raumtemperatur in flüssigem zustand vorliegen. Solche geschmolzenen Salze können auf der Basis von Imidazolium- oder Pyrrolidiniumkationen ausgewählt sein. Aufgrund der hohen Kosten dieser bei Raumtemperatur geschmolzenen Salze sind diese jedoch auf Spezialanwendungen begrenzt, bei denen der Kostenfaktor vernachlässigbar ist. Gute Ergebnisse mit ausreichend hohen Leitfähigkeiten werden auch mit Standardleitsalzen erzielt, beispielsweise mit Tri- oder Tetraethylammoniumtetrafluoroborat.

Im folgenden wird die Erfindung anhand von Ausführungsbeispielen der Erfindung entsprenchend den angefügten Ansprüchen näher erläutert. Des weiteren beschrieben sind auch Beispiele, die für das Verständnis der Erfindung nützlich sind. In der dazu gehörigen Tabelle 1 sind die Zusammensetzungen von 7 Elektrolytlösungen zusammen mit deren bei 25°C ermittelten Leitfähigkeit angegeben. In allen Beispielen wird dasselbe Leitsalz Tetraethylammoniumtetrafluoroborat in einer Konzentration von maximal 1,2 mol/l verwendet. Höhere Konzentrationen können in der Regel die Leitfähigkeit nicht weiter steigern, verursachen daher vermeidbare Mehrkosten. Das Leitsalz selbst ist ohne große Änderungen in der Leitfähigkeit auch gegen andere Leitsalze austauschbar:

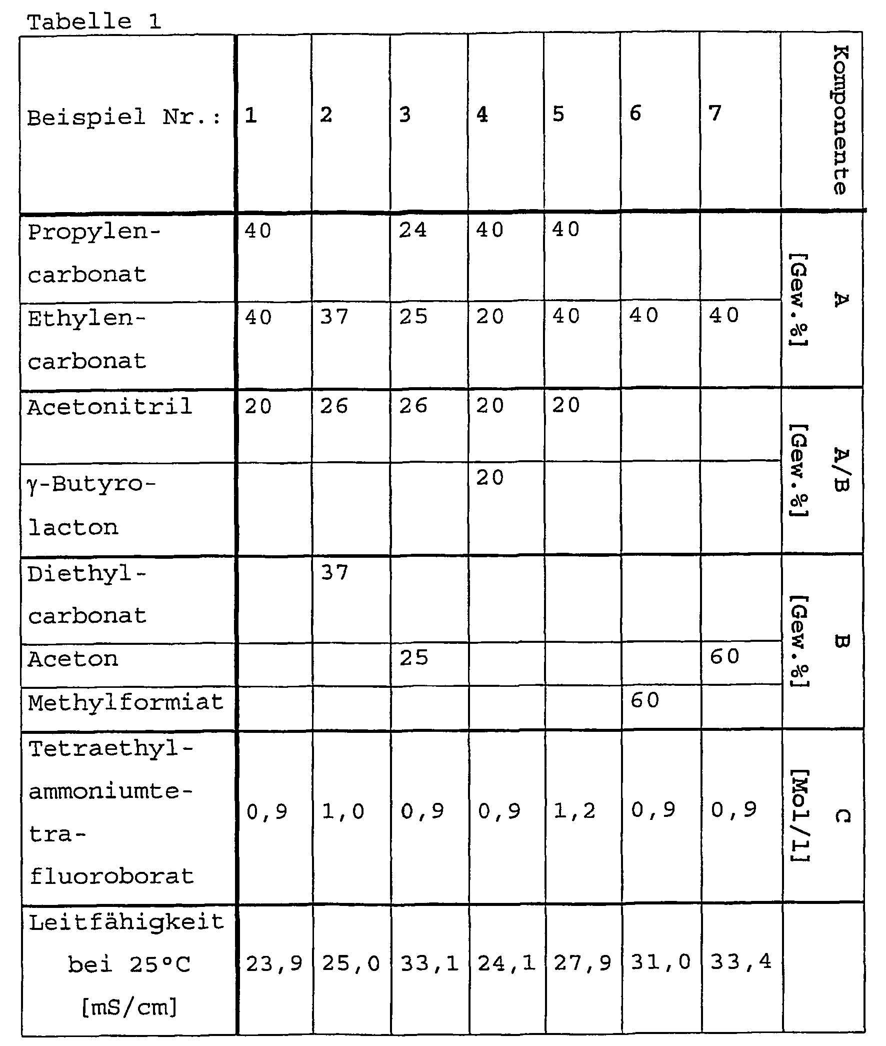

Die Lösungsmittelgemische umfassen in den Beispielen bis zu vier verschiedene einzelne Lösungsmittel, wobei einige Lösungsmittel sowohl der Gruppe A als auch der Gruppe B zuzurechnen sind, daher für beide Kategorien eingesetzt werden können. Der vermeintlich hohe Acetonitrilanteil in den Beispielen 2 und 3 reduziert sich in der gesamten Elektrolytlösung inkl. des Leitsalzes auf ca. 20%, so daß die Gefahr der Entwicklung von HCN als gering einzustufen ist. Die Mengen der Lösungsmittelkomponenten A) und B) sind in Gewichtsprozent, bezogen auf die Zusammensetzung des Lösungsmittel angegeben. Die Mengenangaben zum Leitsalz sind Konzentrationsangaben, bezogen auf mol/l Elektrolytlösung. Es zeigt sich, daß alle Beispiele auch bei unterschiedlichen Zusammensetzungen hohe Leitfähigkeitswerte von hier bis zu 33,4 mS/cm besitzen, die sie bestens für im Leistungsbereich verwendbare Doppelschichtkondensatoren geeignet machen.

Zur Bestimmung der elektrochemischen Daten werden elektrochemische Doppelschichtkondensatoren mit den erfindungsgemäßen Elektrolytlösungen imprägniert, deren elektrische Daten bestimmt und mit denen von bekannten Vergleichselektrolytlösungen verglichen. Die entsprechenden Daten sind in der Tabelle 2 wiedergegeben:

**Tabelle 2**

| Salz | Lösungsmittel | HCN-Entwicklung | Leitf. | R | C |
|---|---|---|---|---|---|
| | | | [mS/cm] | [mΩ] | [F] |
| (C₂H₅)₄NBF₄ | Acetonitril | ja | 54,2 | 9,8 | 139 |
| 0,9 mol/l | 100% | | | | |
| (C₂H₅)₄NBF₄ | γ-Butyrolacton | nein | 17,4 | 33,7 | 126 |
| 0,9 mol/l | 100% | | | | |
| Beispiel 2 | | Stark reduziert | 28,2 | 22,6 | 142 |

Es zeigt sich, daß sich mit erfindungsgemäßen Elektrolytlösungen vergleichbare Leitfähigkeitswerte erzielen lassen wie mit den bekannten Lösungen, die hohe Konzentrationen an Acetonitril enthalten. Ebenso lassen sich vergleichbar niedrige Widerstände in damit befüllten Kondensatoren erzielen. Im Gegensatz zu den bekannten Elektrolytlösungen hoher Leitfähigkeit kommt es bei den erfindungsgemäßen Elektrolytlösungen jedoch entweder zu keiner oder stark reduzierter Blausäure-Entwicklung.

Zum Auffinden einer geeigneten Elektrolytlösung wird außerdem folgendes Verfahren vorgeschlagen. Man nehme ein Leitsalz, beispielsweise ein Standardleitsalz und löse es in einem polaren Lösungsmittel der Gruppe A, bis eine gegebene Konzentration an Leitsalz erreicht ist, beispielsweise 0,5 mol/l. Anschließend wird das polare Lösungsmittel kontinuierlich mit einem niederviskosen weiteren Lösungsmittel der Gruppe B verdünnt, wobei die Leitsalzkonzentration konstant gehalten wird. Für alle Mischungen wird die Leitfähigkeit bestimmt. Es zeigt sich, daß ein optimaler Leitfähigkeitswert bei einem bestimmten Verdünnungsgrad erreicht wird. Anschließend wird der Gehalt an Leitsalz optimiert, wobei stufenweise dessen Anteil erhöht wird. Bei diesem Vorgehen zeigt sich, daß bei einem bestimmten optimalen Konzentrationswert der Komponente C keine weitere Erhöhung der Leitfähigkeit mehr erzielt werden kann. Für einen erfindungsgemäßen Elektrolyten wird daher vorzugsweise die geringste Konzentration an Leitsalz mit optimaler Leitfähigkeit gewählt.

Prinzipiell ist es natürlich auch möglich, zur Optimierung von einer Leitsalzlösung in einem niederviskosen Lösungsmittel (Komponente B) auszugehen und kontinuierlich hochpolares Lösungsmittel (Komponente A) zuzugeben, bzw. den Anteil des hochpolaren Lösungsmittels zu erhöhen. Da in erfindungsgemäßen Elektrolytlösungen jedoch üblicherweise der Anteil der Komponente A überwiegt, ist der erste vorgeschlagene Weg meist von Vorteil, zumal die untersuchten Leitsalze zumeist nicht in reinen Lösungsmitteln der Kategorie B löslich sind.

Das Verfahren kann auch dahingehend modifiziert werden, daß als Komponente A von einer Mischung verschiedener hochpolarer Lösungsmittel ausgegangen wird. Ebenso kann zur Verdünnung der Komponente A auch eine Mischung verschiedener niederviskoser Lösungsmittel (Komponente B) zugegeben werden.

In weiteren Beispielen kann für Komponente A) abgesehen von den bereits oben genannten Lösungsmitteln Propylen- und Ethylencarbonat, γ-Butyrolacton und Acetonitril zusätzlich auch 3 Methyl-2-Oxazolidinon verwendet werden. Die Komponente B) mit niedriger Viskosität kann abgesehen von den bereits genannten Lösungsmitteln Diethylcarbonat, Aceton und Methylformiat auch Ethylacetat und/oder Ethylmethylketon sein. Das Leitsalz kann neben Tetraethylammoniumtetrafluoroborat (C₂H₅)₄NBF₄ auch Lithium-hexafluorophosphat LiPF₆ sein.

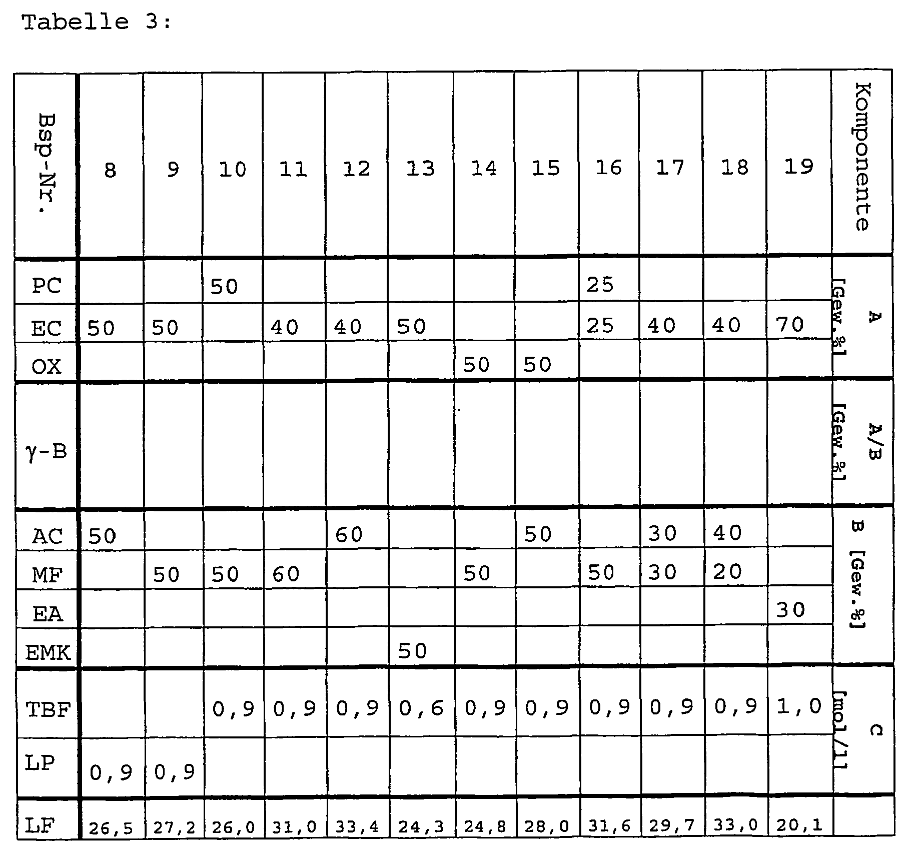

In der Tabelle 3 bezeichnet PC Propylencarbonat, EC Ethylencarbonat, OX 3-Methyl-2-Oxazolidinon, γ-B. γ-Butyrolacton, AC Aceton, MF Methylformiat, EA Ethylacetat, EMK Ethylmethylketon, TBF Tetraethylammoniumtetrafluoroborat, LP Lithium-hexafluorophosphat und LF die Leitfähigkeit der Elektrolytlösungen in mS/cm bei 25°C.

Die hohe Leitfähigkeit der erfindungsgemäßen Elektrolytlösungen macht sich in einem niedrigen ESR-Wert von Doppelschichtkondensatoren bemerkbar, die mit diesen Elektrolytlösungen betrieben werden. Tabelle 4 vergleicht die elektrischen Daten eines herkömmlichen Kondensators mit Propylencarbonat als alleinigem Lösungsmittel (Beispiel 21) mit Kondensatoren, die mit drei der oben genannten erfindungsgemäßen Elektrolytlösungen betreiben werden (Beispiele 11, 12 und 19 aus Tabelle 3).

**Tabelle 4:**

| Beispiel | Leitsalz | Lösungsmittel | Kapazität/F | ESR [100 Hz/mΩ] |
|---|---|---|---|---|
| 21 | 1 M | 100% Propylencarbonat | 112 | 39 |
| | (C₂H₅)₄NBF₄ | | | |
| 11 | 0,9 M | Siehe Tab.3 | 101 | 18 |
| | (C₂H₅)₄NBF₄ | Nr. 11 | | |
| 12 | 0,9 M | Siehe Tab.3 | 123 | 13 |
| | (C₂H₅)₄NBF₄ | Nr. 12 | | |
| 19 | 0,9 M | Siehe Tab.3 | 121 | 23 |
| | (C₂H₅)₄NBF₄ | Nr. 19 | | |

Anhand dieser Tabelle wird deutlich, daß Kondensatoren mit erfindungsgemäßen Elektrolytlösungen bei ungefähr gleicher Kapazität aufgrund ihrer hohen Leitfähigkeiten erheblich niedrigere ESR-Werte aufweisen als bekannte Kondensatoren mit zwar hochpolaren aber auch höherviskosen Lösungsmittel.

Mit dem vorgeschlagenen Verfahren können weitere erfindungsgemäße Elektrolytlösungen aufgefunden werden, deren Zusammensetzung von den Ausführungsbeispielen stark abweichen kann.

In jedem Fall ist es überraschend, daß mit den erfindungsgemäßen Lösungsmittelgemischen, die nicht auf maximale Polarität abgestellt sind, die genannten hohen Leitfähigkeiten von mehr als 24 mS/cm erzielt werden können.

## Patentansprüche

1. Elektrolytlösung für elektrochemische Zellen, mit einer Leitfähigkeit von mehr als 24 mS/cm bei 25°C, folgende Komponenten aufweisend
A) Zumindest ein Lösungsmittel hoher Polarität mit einer DK >10, ausgewählt aus einer Gruppe, die folgende Lösungsmittel aufweist: Propylencarbonat, Ethylencarbonat, 3-Methyl-2-Oxazolidinon, mit einem Anteil je Lösungsmittel von 24 bis 50 Gew%,
B) Zumindest ein Lösungsmittel niedriger Viskosität < 1 cP, ausgewählt aus einer Gruppe, die folgende Lösungsmittel aufweist: Aceton, Methylformiat, Ethylacetat, Ethylmethylketon, mit einem Anteil je Lösungsmittel von 20 bis 60 Gew%,
C) Zumindest ein Leitsalz.

2. Elektrolytlösung nach Anspruch 1,
- bei der Komponente A) zumindest ein cyclisches Carbonat umfaßt, das in der gesamten Elektrolytlösung einen Anteil von zumindest 40 Gew% vorliegt.

3. Elektrolytlösung nach einem der vorherigen Ansprüche,
- bei der als Komponente C) Leitsalze enthalten sind, die bei Raumtemperatur flüssig bzw. geschmolzen vorliegen.

4. Elektrolytlösung nach einem der vorherigen Ansprüche,
- bei der Komponente C) ein Leitsalz umfaßt, das aus Kombinationen der folgenden Anionen und Kationen ausgewählt ist:
- Anionen: PF₆⁻, AsF₆⁻, SO₂CF₃⁻, N(SO₂CF₃)₂⁻, C(SO₂CF₃)₃⁻, BOR₄⁻, BF₄⁻, ClO₄⁻, AlCl₄⁻ oder Fluoralkylphosphate, wobei R ein Alkylrest ist,
- Kationen: (C₂H₅)₄N⁺, (C₂H₅)₃CH₃N⁺, Li⁺, Imidazolium, Pyrrolidinium, Pyridinium, oder Morpholinium.

5. Elektrolytlösung nach einem der vorherigen Ansprüche,
- bei der die Komponente C) Triethylmethyl- oder Tetraethylammoniumtetrafluoroborat ist.

6. Elektrolytlösung nach einem der Ansprüche 1 bis 5,
- bei der Komponente A) eine Mischung aus Propylencarbonat mit einem Anteil von etwa 24 Gew% und Ethylencarbonat mit einem Anteil von etwa 25 Gew% ist,
- bei der Komponente B) eine Mischung aus Acetonitril mit einem Anteil von ungefähr 26 Gew% und Aceton mit einem Anteil von etwa 25 Gew% ist.

7. Elektrolytlösung nach einem der Ansprüche 1 bis 5,
- bei der Komponente A) Ethylencarbonat mit einem Anteil von etwa 40 Gew% ist,
- bei der Komponente B) Methylformiat mit einem Anteil von etwa 60 Gew% ist.

8. Elektrolytlösung nach einem der Ansprüche 1 bis 5,
- bei der Komponente A) Ethylencarbonat mit einem Anteil von von etwa 40 Gew% ist,
- bei der Komponente B) Aceton mit einem Anteil von ungefähr 60 Gew% ist.

9. Elektrolytlösung nach einem der Ansprüche 1 bis 5
- bei der Komponente A) Ethylencarbonat mit einem Anteil von etwa 40 Gew% ist,
- bei der Komponente B) Methylformiat mit einem Anteil von etwa 60 Gew% ist.

10. Elektrolytlösung nach einem der Ansprüche 1 bis 5
- bei der Komponente A) Ethylencarbonat mit einem Anteil von etwa 40 Gew% ist,
- bei der Komponente B) Aceton mit einem.Anteil von etwa 60 Gew% ist.

11. Elektrolytlösung nach einem der Ansprüche 1 bis 5
- bei der Komponente A) Propylencarbonat und Ethylencarbonat mit einem Anteil von jeweils etwa 25 Gew% ist,
- bei der Komponente B) Methylformiat mit einem Anteil von etwa 50 Gew% ist.

12. Elektrolytlösung nach einem der Ansprüche 1 bis 5.
- bei der Komponente A) Ethylencarbonat mit einem Anteil von etwa 40 Gew% ist,
- bei der Komponente B) Aceton mit einem Anteil von etwa 40 Gew% und Methylformiat mit einem Anteil von etwa 20 Gew% ist.

13. Elektrochemischer Doppelschichtkondensator mit Elektroden und einem dazwischen befindlichen porösen Separator mit dem Merkmal,
daß er eine Elektrolytlösung nach einem der vorhergehenden Ansprüche umfaßt.

## Claims

1. Electrolyte solution for electrochemical cells, having a conductivity of more than 24 mS/cm at 25°C, comprising the following components:
A) at least one high-polarity solvent having a dielectric constant >10, selected from a group comprising the following solvents: propylene carbonate, ethylene carbonate, 3-methyl-2-oxazolidinone, the fraction per solvent being in the range from 24 to 50 weight %,
B) at least one solvent of low viscosity <1 cP, selected from a group comprising the following solvents: acetone, methyl formate, ethyl acetate, ethyl methyl ketone, the fraction per solvent being in the range from 20 to 60 weight %,
C) at least one conducting salt.

2. Electrolyte solution according to Claim 1,
- wherein component A) comprises at least one cyclic carbonate which is present in the entire electrolyte solution in a fraction of at least 40 weight %.

3. Electrolyte solution according to any one of the preceding claims,
- wherein component C) comprises conducting salts which are in the liquid or molten state at room temperature.

4. Electrolyte solution according to any one of the preceding claims
- wherein component C) comprises a conducting salt selected from combinations of the following anions and cations:
- anions: PF₆⁻, AsF₆⁻, SO₂CF₃⁻, N(SO₂CF₃)₂⁻, C(SO₂CF₃)₃⁻, BOR₄⁻, BF₄-, ClO₄⁻, AlCl₄⁻ or fluoroalkyl phosphates, where R is an alkyl radical,
- cations: (C₂H₅)₄N⁺, (C₂H₅)₃CH₃N⁺, Li⁺, imidazolium, pyrrolidinium, pyridinium or morpholinium.

5. Electrolyte solution according to any one of the preceding claims,
- wherein component C) is triethylmethylammonium tetrafluoroborate or tetraethylammonium tetrafluoroborate.

6. Electrolyte solution according to any one of the Claims 1 to 5,
- wherein component A) is a mixture of propylene carbonate in a fraction of about 24 weight % and ethylene carbonate in a fraction of about 25 weight %,
- wherein component B) is a mixture of acetonitrile in a fraction of about 26 weight % and acetone in a fraction of about 25 weight %.

7. Electrolyte solution according to any one of the Claims 1 to 5,
- wherein component A) is ethylene carbonate in a fraction of about 40 weight %,
- wherein component B) is methyl formate in a fraction of about 60 weight %.

8. Electrolyte solution according to any one of the Claims 1 to 5,
- wherein component A) is ethylene carbonate in a fraction of about 40 weight %,
- wherein component B) is acetone in a fraction of about 60 weight %.

9. Electrolyte solution according to any one of the Claims 1 to 5,
- wherein component A) is ethylene carbonate in a fraction of about 40 weight %,
- wherein component B) is methyl formate in a fraction of about 60 weight %.

10. Electrolyte solution according to any one of the Claims 1 to 5,
- wherein component A) is ethylene carbonate in a fraction of about 40 weight %,
- wherein component B) is acetone in a fraction of about 60 weight %.

11. Electrolyte solution according to any one of the Claims 1 to 5,
- wherein component A) is propylene carbonate and ethylene carbonate each in a fraction of about 25 weight %,
- wherein component B) is methyl formate in a fraction of about 50 weight %.

12. Electrolyte solution according to any one of the Claims 1 to 5,
- wherein component A) is ethylene carbonate in a fraction of about 40 weight %,
- wherein component B) is acetone in a fraction of about 40 weight % and methyl formate in a fraction of about 20 weight %.

13. Electrochemical double-layer capacitor with electrodes and a porous separator therebetween, having the feature of comprising an electrolyte solution according to any one of the preceding claims.

## Revendications

1. Solution électrolytique pour piles électrochimiques, ayant une conductibilité de plus de 24 mS/cm à la température de 25°C, présentant les composants suivants
A) au moins un solvant à polarité élevée, ayant une valeur DK > 10, sélectionné parmi un groupe qui présente les solvants suivants: carbonate de propylène, carbonate d'éthylène, 3-méthyl-2-oxazolidinone, avec une proportion de chaque solvant de 24 à 50% en poids,
B) au moins un solvant à viscosité faible < 1 cP, sélectionné parmi un groupe, qui présente les solvants suivants : acétone, formiate de méthyle, acétate d'éthyle, éthylméthylcétone, avec une proportion de chaque solvant de 20 à 60% en poids,
C) au moins un sel conducteur.

2. Solution électrolytique selon la revendication 1,
- dans laquelle le composant A) comprend au moins un carbonate cyclique, qui est présent dans la solution électrolytique globale dans une proportion d'au moins 40% en poids.

3. Solution électrolytique selon l'une quelconque des revendications précédentes,
- dans laquelle sont contenus, en tant que composant C), des sels conducteurs, qui sont présents à la température ambiante sous forme liquide ou sous forme fondue.

4. Solution électrolytique selon l'une quelconque des revendications précédentes,
- dans laquelle le composant C) comprend un sel conducteur, qui est sélectionné parmi des combinaisons des anions et des cations suivants:
- anions : PF₆⁻, AsF₆⁻, SO₂CF₃⁻, N(SO₂CF₃)₂⁻, C(SO₂CF₃)₃⁻, BOR₄⁻, BF₄⁻, ClO₄⁻, AlCl₄⁻ ou des phosphates fluoroalkyle, R étant un radical alkyle,
- cations : (C₂H₅)₄N⁺, (C₂H₅)₃CH₃N⁺, Li⁺, imidazolium, pyrrolidinium, pyridinium ou morpholinium.

5. Solution électrolytique selon l'une quelconque des revendications précédentes,
- dans laquelle le composant C) est un tétrafluoroborate de triéthylméthylammonium ou de tétraéthylammonium.

6. Solution électrolytique selon l'une quelconque des revendications 1 à 5,
- dans laquelle le composant A) est un mélange de carbonate de propylène avec une proportion d'environ 24% en poids et de carbonate d'éthylène avec une proportion d'environ 25% en poids
- dans laquelle le composant B) est un mélange d'acétonitrile avec une proportion d'environ 26% en poids et d'acétone avec une proportion d'environ 25% en poids.

7. Solution électrolytique selon l'une quelconque des revendications 1 à 5,
- dans laquelle le composant A) est le carbonate d'éthylène avec une proportion d'environ 40% en poids,
- dans laquelle le composant B) est le formiate de méthyle avec une proportion d'environ 60% en poids.

8. Solution électrolytique selon l'une quelconque des revendications 1 à 5,
- dans laquelle le composant A) est le carbonate d'éthylène avec une proportion d'environ 40% en poids,
- dans laquelle le composant B) est l'acétone avec une proportion d'environ 60% en poids.

9. Solution électrolytique selon l'une quelconque des revendications 1 à 5,
- dans laquelle le composant A) est le carbonate d'éthylène avec une proportion d'environ 40% en poids,
- dans laquelle le composant B) est le formiate de méthyle avec une proportion d'environ 60% en poids.

10. Solution électrolytique selon l'une quelconque des revendications 1 à 5,
- dans laquelle le composant A) est le carbonate d'éthylène avec une proportion d'environ 40% en poids,
- dans laquelle le composant B) est l'acétone avec une proportion d'environ 60% en poids.

11. Solution électrolytique selon l'une quelconque des revendications 1 à 5,
- dans laquelle le composant A) est le carbonate de propylène et le carbonate d'éthylène avec une proportion à chaque fois d'environ 25% en poids,
- dans laquelle le composant B) est le formiate de méthyle avec une proportion d'environ 50% en poids.

12. Solution électrolytique selon l'une quelconque des revendications 1 à 5,
- dans laquelle le composant A) est le carbonate d'éthylène avec une proportion d'environ 40% en poids,
- dans laquelle le composant B) est l'acétone avec une proportion d'environ 40% en poids et le formiate de méthyle avec une proportion d'environ 20% en poids.

13. Condensateur électrochimique à double couche avec des électrodes et avec un diaphragme poreux se trouvant entre elles, **caractérisé**
**en ce qu'**il comprend une solution électrolytique selon l'une quelconque des revendications précédentes.
